# FASCICULE DE BREVET EUROPEEN

(11) **EP 0 947 131 B1**
(45) Date de publication et mention de la délivrance du brevet: **02.05.2003**
(21) Numéro de dépôt: 99400582.5
(22) Date de dépôt: 10.03.1999
(51) Int. Cl.: A01K 1/015

(54) **Matériau de litière pour animaux et procédé de fabrication d'un tel matériau**
Material für Tierstreu und Verfahren zur Herstellung solches Materials
Material for animal litter and method for making such material

(30) Priorité: 30.03.1998 FR 9803891
(43) Date de publication de la demande: 06.10.1999
(73) Titulaire: Florentaise, 44850 Saint Mars du Desert (FR)
(72) Inventeur: Masselin, Martine, 60750 Choisy-au-Bac (FR)
(74) Mandataire: Intès, Didier Gérard André

(56) Documents cités:
- EP-A- 0 147 349
- EP-A- 0 710 438
- FR-A- 1 471 758
- FR-A- 1 583 783
- FR-A- 2 193 350
- US-A- 4 258 659
- US-A- 5 152 251

## Description

La présente invention concerne un matériau de litière pour animaux.

Pour les petits animaux domestiques, comme les chats, les lapins, les hamsters,... la principale qualité recherchée pour un matériau de litière est son pouvoir absorbant. Jusqu'aux années 70, on utilisait principalement des matériaux de récupération (papiers déchirés) ou de la sciure de bois. Ces matériaux ont été peu à peu abandonnés au profit des litières granulées, par exemple réalisées à partir de minéraux, qui semblent plus "propres" que les matériaux précités. En effet, ces litières granulées présentent en général un assez bon pouvoir absorbant et contiennent souvent des produits désodorisants. Les litières granulées sont toutefois relativement coûteuses. De plus, elles sont conditionnées en sachets relativement volumineux, ce qui constitue un inconvénient pour la ménagère.

Pour les plus grands animaux, comme les chevaux, on utilise en général de la paille naturelle, qui présente l'avantage d'être peu coûteuse. Toutefois, la paille pourrit relativement rapidement et sa qualité est très inégale d'une récolte à l'autre. De plus, la paille contient la plupart du temps des fibrilles et des poussières de très faibles dimensions qui, si la litière est remuée, sont mises en suspension dans l'air et peuvent être aspirées par les chevaux lors de leur respiration.

Il faut également noter que la paille contient des engrais et des pesticides résiduels qui nuisent à la santé des chevaux.

De plus l'entretien (brassage, remplacement fréquent...) d'une litière de paille est coûteux en main d'oeuvre et le fumier de paille est volumineux et difficile à évacuer. En outre, les chevaux ont tendance à manger la paille de la litière, ce qui rend pratiquement impossible le contrôle de leur régime alimentaire.

Il faut encore relever que, chez certains animaux, la paille peut être à l'origine de coliques souvent mortelles.

La présente invention a pour but de proposer un matériau de litière pour animaux, qui puisse être adapté pour les petits animaux comme pour les grands animaux et qui puisse remplacer avantageusement les matériaux précités de l'art antérieur.

La demande de brevet européen EP-A-0 147 349 divulgue un milieu de culture pour plantes qui est constitué de fibres de bois obtenues par défibrage et par cuisson à la vapeur. Ce document se réfère aux propriétés de perméabilité et de rétention d'eau de ces fibres, ces propriétés étant mises à profit dans le milieu de culture.

Le matériau selon l'invention est défini par la revendication 1.

L'indication selon laquelle le matériau comprend "essentiellement" des fibres de bois signifie qu'il est pratiquement exclusivement constitué de fibres de bois, seuls des produits adjuvants (désodorisants...) pouvant éventuellement être ajoutés aux fibres.

L'indication selon laquelle les fibres forment un ensemble ou une structure "aéré" signifie que, dans les conditions normales d'utilisation, des interstices formant de petites poches d'air sont ménagés entre les fibres. Ces interstices favorisent la circulation d'air entre les fibres (donc leur séchage après humidification) et confèrent une certaine souplesse et une certaine élasticité à la litière.

On connaît avec la capacité qu'ont les matériaux à base de fibres de bois de restituer progressivement l'humidité préalablement absorbée et on l'a déjà mise à profit pour réaliser des substrats de culture. Ceci est le cas de la demande de brevet européen EP-A-0 147 349 précitée et du brevet français n° 2 248 780 qui préconise l'utilisation, comme milieux de culture pour plantes, de "granofibres", c'est-à-dire de granulés obtenus à partir de fibres de bois, par exemple par le procédé décrit dans le brevet français n° 2 193 350.

La Demanderesse a eu l'idée originale d'utiliser un matériau à base de fibres de bois pour réaliser des litières pour animaux et a constaté que ce matériau convient parfaitement pour cette application dans la mesure où les fibres, en condition d'utilisation, sont disposées de manière aérée.

Du fait de la cuisson à la vapeur liée au défibrage, les fibres sont parfaitement propres, contrairement à la paille. De plus, cette cuisson rend les fibres pratiquement inertes chimiquement et elles ne pourrissent pas rapidement, de sorte que la litière est extrêmement saine. Toutefois, les fibres sont biodégradables de sorte que, après leur utilisation, les litières de grands animaux utilisant le matériau conforme à l'invention peuvent être réutilisées en amendement ou en paillage de végétaux, etc...

Le fait que les fibres du matériau conforme à l'invention forment un ensemble aéré s'est avéré être déterminant.

En effet, la Demanderesse a constaté que, dans cette structure aérée, les fibres conservent leur capacité d'absorption d'eau, de sorte qu'elles absorbent les liquides des déjections animales, et qu'elles peuvent également sécher relativement rapidement, au moins en surface, ce qui augmente l'agrément de la litière pour l'animal et prolonge la durée de vie de cette litière.

De plus, cette structure aérée permet de comprimer les fibres lors de leur conditionnement, ce qui permet d'offrir à la ménagère des conditionnements comparativement plus légers et nettement moins volumineux que les sacs de granulés classiques de litières pour petits animaux, pour un même volume réel d'utilisation, l'ensemble des fibres reprenant naturellement son volume à l'état aéré.

En outre, les fibres de bois ne sont pas irritantes et ne blessent pas les pattes des petits animaux.

Pour les grands animaux, les pelotes de fibres de bois permettent de former une couche souple de litière qui présente un confort nettement amélioré par rapport à la paille et permet en particulier un meilleur repos pour les pieds des chevaux, ce qui est extrêmement intéressant pour les chevaux de course ou les chevaux d'obstacle.

Les fibres sont au moins partiellement enroulées sur elles-mêmes, ce qui présente plusieurs avantages. D'une part, cette conformation renforce l'effet "ressort" des fibres (souplesse de la litière) et ménage naturellement des interstices d'air au creux des fibres enroulées.

D'autre part, les fibres enroulées ont tendance à s'accrocher les unes dans les autres sans pour autant se tasser les unes contre les autres.

Les fibres accrochées ensemble ne peuvent pratiquement pas rester en suspension dans l'air contrairement aux poussières de paille, même si la litière comporte de très petites fibres.

Il faut encore noter que contrairement à certains granulés de trop petite taille, elles ne risquent pas de se coincer entre les doigts des pattes des petits animaux. Il en résulte une amélioration des conditions d'hygiène, puisque le matériau n'est pas entraîné par l'animal en dehors de la litière.

Le matériau conforme à l'invention peut être fabriqué pour un prix de revient faible et possède un excellent pouvoir absorbant puisque, selon la taille des fibres, il peut retenir jusqu'à 40% d'eau en volume.

Avantageusement à pF 1, le matériau comprend, en volume, entre 15% et 50% de fibres solides entre 50% et 85% d'air.

Avantageusement, le matériau comporte en outre un ou plusieurs produits adjuvants. Par exemple, on peut ajouter aux pelotes de fibres des produits aptes à favoriser encore le séchage du matériau après une humidification. On peut également y ajouter des produits désodorisants, en particulier pour les litières d'animaux domestiques d'intérieur, et des produits aseptisants. On peut encore y ajouter des produits colorants.

En fait, les fibres de bois qui constituent le matériau de base de la litière étant pratiquement inertes chimiquement, on peut choisir pratiquement les mêmes adjuvants que ceux qui sont déjà utilisés pour les litières plus classiques pour petits animaux, constituées par des granules à base de minéraux.

Bien que des fibres fines soient envisageables, on choisira avantageusement des fibres de bois moyennes (diamètre d'environ 7/10 mm à environ 1,5 mm et longueur d'environ 1 ou 2 cm), voire des fibres relativement grossières (diamètre de l'ordre de 2 à 3 mm ; longueur de 2 ou 3 cm, voire environ 5 cm). En effet, des fibres suffisamment grandes s'aèrent bien les unes par rapport aux autres et risquent encore moins que les petites fibres d'être mises en suspension dans l'air. Les fibres utilisées pour l'invention sont avantageusement obtenues à partir de l'aubier de bois résineux.

L'invention concerne également un procédé de préparation d'un matériau de litières pour animaux.

On a indiqué précédemment les inconvénients des litières connues pour les petits animaux et pour les grands animaux.

Les granulés connus de litières pour petits animaux sont obtenus à la suite de transformations physico-chimiques qui entraînent des coûts de fabrication relativement élevés. Par ailleurs, les litières pour grands animaux à base de paille sont obtenues pour un prix de revient peut élevé, mais elles ne présentent pas de caractéristiques satisfaisantes puisque, en particulier, leur qualité est très inégale.

L'invention vise à proposer un procédé de fabrication qui soit simple et peu coûteux, tout en permettant d'obtenir des litières de très bonne qualité.

Ce but est atteint grâce au fait que le procédé selon l'invention comprend une étape de défibrage de pièces de bois et de cuisson à la vapeur pour obtenir des fibres de bois et une étape d'enroulement des fibres qui consiste à remuer les fibres dans une enceinte seulement jusqu'à ce qu'elles s'enroulent au moins partiellement sur elles-mêmes.

L'étape de défibrage et de cuisson à la vapeur est connue en soi. Elle consiste à découper les pièces de bois en copeaux qui sont cuits à la vapeur, c'est-à-dire qu'ils sont soumis à des pressions de vapeur d'eau de l'ordre de 6 à 10 bar, pour des températures de l'ordre de 150°C à 180°C, pendant quelques minutes. Après cette opération, les copeaux sont friables et ils peuvent être défibrés à l'aide de disques de cisaillement rotatifs (en général, un disque stator et un disque rotor). Cette opération de défibrage proprement dit peut également être réalisée en atmosphère saturée en vapeur d'eau sous pression.

L'étape d'enroulement des fibres est opérée en atmosphère "sèche", c'est-à-dire en atmosphère exempte de vapeur d'eau ou de liquide vecteur, l'humidité ambiante éventuelle étant seulement due à l'humidité propre des fibres après leur égouttage à la sortie du défibreur. Les brevets français n° 1 583 783 et n° 2 193 350 proposaient, pour diverses applications, de réaliser une véritable granulation des fibres en deux temps, tout d'abord par un traitement à sec permettant de former des agrégats de fibres, puis par un traitement en voie humide permettant de transformer les agrégats en véritables granulés consolidés. Le traitement complet durait suffisamment longtemps (au moins 1 à 2 heures) pour permettre l'obtention de réels granulés dans lesquels les interstices entre les fibres étaient déjà diminués autant que possible.

La Demanderesse a constaté que l'étape d'enroulement peut être réalisée de manière très simple et peu coûteuse, dans un temps très court de l'ordre de 10 à 20 minutes.

A l'issue de cette étape, les fibres sont (au moins pour la plupart d'entre elles) au moins partiellement enroulées sur elles-mêmes (amorces de tortillons ou de spirales). Elles peuvent à la fois s'accrocher les unes aux autres et former un ensemble aéré. A l'issue de l'étape d'enroulement, certaines fibres peuvent même être accrochées en formant des paquets ou des pelotes aérés, sans pour autant former des agglomérats denses ; c'est précisément le fait d'éviter d'obtention de tels agglomérats denses que l'on met en avant en indiquant que l'on remue les fibres "seulement" jusqu'à ce qu'elles s'enroulent au moins partiellement sur elles-mêmes.

Au cours de l'étape d'enroulement, de préférence, aucun vecteur liquide ou humide n'est utilisé, l'humidité ambiante de l'enceinte étant seulement éventuellement due à l'humidité propre des fibres. La température dans l'enceinte peut être de l'ordre de 40°C.

Avantageusement, l'étape d'enroulement est suivie d'une étape de séchage des fibres, par exemple à l'air pulsé. Ce séchage permet de donner au matériau de litière un niveau hygrométrique constant ou sensiblement constant, en correspondance avec l'utilisation qui sera faite de la litière (type d'animaux ...). Il ne s'agit pas d'une déshydratation complète, mais d'un séchage jusqu'à un niveau d'hygrométrie donné.

A l'issue de l'étape d'enroulement, on peut réaliser un classement des fibres pour écarter les fibres trop petites ou pour les replacer dans l'enceinte afin qu'elles s'accrochent à d'autres fibres sortant du défibreur, lorsque ces autres fibres sont elles-mêmes soumises à l'étape d'enroulement.

Avantageusement, l'enceinte dans laquelle on remue les fibres est constituée par un tambour entraîné en rotation analogue à celui que préconise le brevet français n° 2 193 350.

Ce tambour peut être constitué par un cylindre dont l'axe est orienté horizontalement.

On peut choisir d'utiliser un tambour dont la périphérie intérieure est sensiblement lisse, ou un tambour équipé d'organes de brassage. On peut également choisir d'excentrer l'axe de rotation du tambour par rapport à son axe géométrique.

Il n'est pas nécessaire de faire tourner le tambour trop rapidement et sa vitesse périphérique de rotation peut être comprise entre 70 m/minutes et 90 m/minutes.

Par exemple, on pourra utiliser un cylindre de diamètre égal à 2 m, rempli environ aux 2/3 de son volume par des fibres égouttées après le défibrage, et de faire tourner ce tunnel pendant 12 minutes à une vitesse périphérique de 80 m/minutes, pour obtenir des fibres "enroulées" convenant à l'invention.

## Revendications

1. Matériau convenant à un usage en tant que litière pour animaux, comprenant essentiellement des fibres de bois au moins partiellement enroulées sur elles-mêmes, susceptibles d'être obtenues par défibrage et cuisson à la vapeur, et formant un ensemble aéré de fibres.

2. Matériau selon la revendication 1, qui, à pF1, comprend en volume entre 15% et 50% de matière fibreuse solide et entre 50% et 85% d'air.

3. Matériau selon la revendication 1 ou 2, comportant, en outre, un produit adjuvant choisi dans le groupe comprenant des produits aptes à favoriser le séchage du matériau après une humidification, des produits désodorisants, des produits aseptisants et des produits colorants.

4. Procédé de préparation d'un matériau selon l'une quelconque des revendications 1 à 3, **caractérisé en ce qu'**il comprend une étape de défibrage de pièces de bois et de cuisson à la vapeur pour obtenir des fibres de bois et une étape d'enroulement des fibres qui consiste à remuer les fibres dans une enceinte seulement jusqu'à ce qu'elles s'enroulent au moins partiellement sur elles-mêmes.

5. Procédé selon la revendication 4, **caractérisé en ce que** l'étape d'enroulement est suivie par une étape de séchage des fibres.

6. Procédé selon la revendication 4 ou 5, **caractérisé en ce que** l'enceinte est constituée par un tambour entraîné en rotation.

7. Procédé selon la revendication 6, **caractérisé en ce que** la durée de séjour des fibres dans le tambour rotatif est de l'ordre de 10 minutes à 20 minutes.

8. Procédé selon la revendication 6 ou 7, **caractérisé en ce que** la vitesse périphérique de rotation du tambour est comprise entre 70 m/min et 90 m/min.

## Patentansprüche

1. Material zur Verwendung als Einstreu für Tiere geeignet, das im Wesentlichen wenigstens teilweise eingerollte Holzfasern aufweist, die durch Zerfaserung und Dämpfen gewonnen werden können und eine durchlüftete Fasereinheit bilden.

2. Material nach Anspruch 1, das bei einem pF-Wert 1 ein Volumen von 15 % bis 50 % festes Fasergut und 50 % bis 85 % Luft aufweist.

3. Material nach Anspruch 1 oder 2, das ferner ein Zusatzmittel umfasst, das aus der Gruppe von Mitteln ausgewählt ist, die die Trocknung des Materials nach einer Befeuchtung zu begünstigen vermögen, sowie Desodorierungsmittel, Antiseptika und Farbstoffe.

4. Verfahren zur Gewinnung eines Materials nach einem der Ansprüche 1 bis 3, **dadurch gekennzeichnet, dass** es zum Gewinnen von Holzfasern einen Arbeitsschritt zum . Zerfasern von Holzstücken und zum Dämpfen umfasst, sowie einen Arbeitsschritt zum Einrollen der Fasern, der darin besteht, die Fasern in einem Behälter nur solange zu bewegen, bis sie sich wenigstens teilweise einrollen.

5. Verfahren nach Anspruch 4,
**dadurch gekennzeichnet, dass** auf den Arbeitsschritt zum Einrollen der Fasern ein Arbeitsschritt zum Trocknen der Fasern folgt.

6. Verfahren nach Anspruch 4 oder 5,
**dadurch gekennzeichnet, dass** der Behälter aus einer sich drehenden Tommel gebildet ist.

7. Verfahren nach Anspruch 6,
**dadurch gekennzeichnet, dass** die Verweildauer der Fasern in der sich drehenden Trommel etwa 10 bis 20 Minuten beträgt.

8. Verfahren nach Anspruch 6 oder 7
**dadurch gekennzeichnet, dass** die Umfangsdrehgeschwindigkeit der Trommel 70 m/min bis 90 m/min beträgt.

## Claims

1. Material suitable for use as animal litter and comprising essentially wood fibres which are at least partially rolled up on themselves and which are capable of being obtained by grinding and steam-cooking, and forming an aerated mass of fibres.

2. Material according to claim 1 which at pF1 comprises, by volume, between 15% and 50% solid fibrous matter and between 50% and 85% air.

3. Material according to claim 1 or 2, comprising in addition an additive selected from the group comprising products capable of promoting the drying of the material after wetting, deodorant products, disinfectant products and colouring products.

4. Method of preparing a material according to any one of claims 1 to 3, **characterised in that** it comprises a stage of grinding pieces of wood and of steam-cooking in order to obtain wood fibres, and a stage of rolling up the fibres which consists in stirring the fibres in an enclosure only until they are at least partially rolled up on themselves.

5. Method according to claim 4, **characterised in that** the rolling-up stage is followed by a stage of drying the fibres.

6. Method according to claim 4 or 5, **characterised in that** the enclosure comprises a drum driven in rotation.

7. Method according to claim 6, **characterised in that** the period during which the fibres stay in the rotary drum is of the order of 10 minutes to 20 minutes.

8. Method according to claim 6 or 7, **characterised in that** the peripheral speed of the drum is between 70 m/min and 90 m/min.
